# EUROPEAN PATENT APPLICATION

(11) **EP 3 984 693 A1**
(43) Date of publication of application: **20.04.2022**
(21) Application number: 20822016.0
(22) Date of filing: 12.06.2020
(51) Int. Cl.: B23Q 17/00, B23Q 11/00, B23Q 11/08

(54) **MACHINE TOOL**

(30) Priority: 13.06.2019 JP 2019110549
(71) Applicant: DMG Mori Co., Ltd., Yamatokoriyama-shi, Nara 639-1160 (JP)
(72) Inventor: YAMANE Masahiro, Yamatokoriyama-shi, Nara 639-1160 (JP)
(74) Representative: Keltie LLP
(86) International application number: PCT/JP2020/023163
(87) International publication number: WO 2020/251007

(57) **Abstract**

A machine tool includes a drive portion that moves a movable cover on a rail, cleaning means that removes a foreign object on the rail, and a body control unit that controls the drive portion so as to move the movable cover on the rail. The machine tool further includes detection means that detects a foreign object on the rail, and the body control unit is configured to control the cleaning means so as to remove a foreign object on the rail, and to control the drive portion so as to move the movable cover on the rail, if the detection means does not detect any foreign object on the rail, or if the detection means detects a foreign object on the rail and thereafter the cleaning means removes the foreign object on the rail.

## Description

### [Technical Field]

The present invention relates to a machine tool and a control method thereof, and particularly relates to a machine tool that removes a foreign object on a rail, and moves a movable cover on the rail, and a control method thereof.

### [Background Art]

In general, a machine tool is configured to define a machining region by a fixed cover (also referred to as a splash guard) so as to protect an operator located outside the machining region, because chips generated from a workpiece, or a coolant or the like for cooling the workpiece and tools such as a cutting tool scatters. The machine tool includes a movable cover that is movable relative to the fixed cover in order to allow the operator to load and unload the workpiece into and from the machining region, and also to perform cleaning or maintenance work of the interior of the machining region. That is, the machine tool can machine the workpiece inside the machining region while ensuring the safety of the operator when the movable cover is at a closed position relative to the fixed cover, and allow cleaning or maintenance work of the interior of the machining region to be performed when the movable cover is at an open position relative to the fixed cover.

When the movable cover is automatically opened and closed relative to the fixed cover, there is the possibility that the operator or a robot may be caught between the movable cover and the fixed cover due to an incorrect operation performed by the operator, resulting in injury to the operator, and damage to the drive mechanism of the robot or the movable cover. For example, PTL 1 describes a machine tool including a door opening/closing device that can ensure the safety at a low cost.

Specifically, the machine tool including the door opening/closing device described in PTL 1 includes a movable cover that is moved on a rail to be opened and closed, a door opening/closing motor that drives the movable cover so as to be moved, and a power transmission mechanism (e.g., a ball screw) that transmits the power of the door opening/closing motor to the movable cover. A disturbance torque that is applied to the door opening/closing motor is estimated when the movable cover is opened/closed, and a motor stop unit is provided that stops the opening/closing of the movable cover if the disturbance torque exceeds a predetermined upper limit value, or falls below a predetermined lower limit value. In particular, the motor stop unit stops the opening/closing of the movable cover if the disturbance torque applied to the door opening/closing motor exceeds the upper limit value, in order to detect an obstacle caught between the movable cover and the fixed cover.

### [Citation List]

### [Patent Literature]

[PTL 1] Japanese Laid-Open Patent Publication No. 2017-109286

### [Summary of Invention]

### [Technical Problem]

Typically, a movable cover includes a roller that rotates on a rail, and, when a foreign object (such as a cutting chip generated due to machining) is present on the rail, the roller or the like of the movable cover receives impact (disturbance torque) generated upon colliding with the foreign object on the rail, whereby the opening/closing of the movable cover can be stopped. However, at this time, the roller, the rail, and/or a seal wiper of the movable cover may be damaged.

Nowadays, automation has progressed for a system in which a robotic arm is used to load an unmachined workpiece into a machining region, and unload the machined workpiece from the machining region In particular, there have been frequent occurrences of a case where, when the machined workpiece is unloaded from the machining region, a foreign object attached to the workpiece falls (is attached) onto the rail, thus stopping the opening/closing of the movable cover.

If a foreign object falls on the rail when the operator is manually unloading the workpiece from the machining region, the operator can determine that the foreign object will obstruct the opening/closing of the movable cover and thus immediately remove the foreign object. However, the above-described automated system is not provided with means for removing the foreign object attached on the rail. Therefore, with the machine tool described in PTL 1, the operator needs to manually remove the foreign object each time the motor stop unit stops the opening/closing of the movable cover, resulting in the problem that the working efficiency cannot be significantly improved despite that the automated system is employed.

Furthermore, when a series of workpieces are to be continuously machined using the above-described automated system in the absence of the operator (e.g., at night), if a foreign object generated during machining is attached onto the rail and thus hinders the opening/closing of the movable cover, the machining of the workpieces is suspended for a long period of time (until the next morning when the operator removes the foreign object and restarts the automated system), resulting in the problem that the production yield is significantly reduced.

### [Solution to Problem]

Therefore, a first aspect of the present invention relates to a machine tool, and the machine tool includes a drive portion that moves a movable cover on a rail, cleaning means that removes a foreign object on the rail, and a body control unit that controls the drive portion so as to move the movable cover on the rail.

Preferably, the machine tool further includes detection means that detects a foreign object on the rail, and the body control unit is configured to control the cleaning means so as to remove a foreign object on the rail, and to control the drive portion so as to move the movable cover on the rail, if the detection means does not detect any foreign object on the rail, or if the detection means detects a foreign object on the rail and thereafter the cleaning means removes the foreign object on the rail.

The machine tool further includes a casing that defines a machining region in which a workpiece is machined, and that includes a casing front portion opposed to the rail, and the movable cover includes a roller that rotates along the rail, and a protection plate disposed between the machining region, and the rail and the roller.

The cleaning means may specifically include a rotary brush, a fixed brush, a blade, an air blower, a wiper, or an electromagnet member, and may be attached to the movable cover, or attached to the casing front portion so as to be movable along a longitudinal direction of the rail.

Alternatively, the cleaning means may be attached to an auxiliary device such as an autonomous mobile robot (AGV), rather than to the machine tool. In this case, the machine tool may further include detection means that detects a foreign object on the rail, and an auxiliary device including an auxiliary control unit capable of communicating with the body control unit, the cleaning means may be attached to the auxiliary device, and include a rotary brush, a fixed brush, a blade, an air blower, a wiper, or an electromagnet member that is movable along the longitudinal direction of the rail, the body control unit may control the cleaning means so as to communicate with the auxiliary control unit to remove the foreign object on the rail, and the body control unit may control the drive portion so as to move the movable cover on the rail, if the detection means does not detect any foreign object on the rail, or if the detection means detects a foreign object on the rail and thereafter the cleaning means removes the foreign object on the rail.

Preferably, the rotary brush rotates along the longitudinal direction of the rail (the direction of movement; the opening direction or the closing direction), or rotates in a direction substantially orthogonal to the longitudinal direction.

Also preferably, the air blower ejects a gas to the rail toward the longitudinal direction of the rail, or toward a direction substantially orthogonal to the longitudinal direction.

As another specific example, the cleaning means may include a main flow path extending in the longitudinal direction of the rail, and a plurality of branch flow paths extending from the main flow path, and remove the foreign object on the rail by supplying a gas to the main flow path so as to be ejected from the branch flow paths.

In this case, the cleaning means is configured such that the main flow path of the cleaning means penetrates inside the rail, and the branch flow paths are formed so as to extend on a surface of the rail, or may be configured such that a conduit pipe constituting the main flow path of the cleaning means is provided at the casing front portion, and a gas is ejected toward the rail from the branch flow paths.

On the other hand, the detection means may specifically include a displacement sensor, a measurement sensor, or an image sensor, and may be attached to the movable cover, or attached to the casing front portion so as to be movable along the longitudinal direction of the rail, or disposed inside the machining region.

Alternatively, the detection means may be attached to a robotic arm provided in the auxiliary device, rather than to the machine tool. In this case, the detection means includes a displacement sensor, a measurement sensor, or an image sensor that is attached to the auxiliary device, and the body control unit is configured to communicate with the auxiliary control unit to control the detection means so as to detect a foreign object on the rail.

Furthermore, the detection means may include a probe that is fixed to the movable cover, or fixed to the casing front portion so as to be movable along the longitudinal direction of the rail, and may detect a foreign object on the rail by detecting a change in electrical resistance or capacitance between the probe and the rail.

Note that the auxiliary device may be an autonomous mobile robot. The autonomous mobile robot is the next-generation transport system that automates the loading/unloading of a workpiece into and from the machine tool and the logistics in a factory in which a plurality of machine tools are provided, and also realizes a coexistence environment with a person (operator).

A second aspect of the present invention relates to a control method of a machine tool. The control method includes a cleaning step of removing a foreign object on a rail, and a moving step of moving, after the cleaning step, a movable cover on the rail.

Preferably, the control method further includes a detection step of detecting a foreign object on the rail, and the moving step moves the movable cover on the rail, if no foreign object is detected on the rail, or if a foreign object on the rail is removed.

Furthermore preferably, the detection step is repeatedly performed, and, if a foreign object is detected on the rail during the step of moving the movable cover on the rail, the movable cover is moved on the rail in the opposite direction, and thereafter the cleaning step of removing the foreign object on the rail is performed.

### [Advantageous Effects of Invention]

According to an aspect of the present invention, the roller of the movable cover of the machine tool does not collide with the foreign object on the rail when the movable cover is moved on the rail to be opened or closed, and it is thus possible to prevent damage to the roller and/or the rail.

While the novel features of the invention are set forth in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic perspective view showing an overall configuration of a machine tool according to an embodiment of the present invention
[FIG. 2] FIG. 2 is a cross-sectional view of a movable cover according to the present embodiment, taken along a vertical cross section.
[FIG. 3] FIG. 3 is a partially phantom perspective view of the portion indicated by the dashed circle in FIG. 2, as viewed outward from a machining region.
[FIG. 4] FIG. 4 is an enlarged cross-sectional view showing portions of the movable cover and a casing, as viewed from a horizontal direction.
[FIG. 5] FIGS. 5(a) and 5(b) are a plan view and a cross-sectional view, respectively, conceptually showing a specific example of cleaning means.
[FIG. 6] FIGS. 6(a) and 6(b) are a plan view and a front view, respectively, conceptually showing another specific example of the cleaning means.
[FIG. 7] FIG. 7 is a perspective view conceptually showing still another specific example of the cleaning means.
[FIG. 8] FIG. 8(a) is a plan view showing yet another specific example of the cleaning means, and FIGS. 8(b) and 8(c) are cross-sectional views taken along the lines B-B and C-C, respectively, in FIG. 8(a).
[FIG. 9] FIGS. 9(a) and 9(b) are a cross-sectional view and a front view, respectively, showing a further specific example of the cleaning means.
[FIG. 10] FIG. 10(a) is a diagram showing an overall configuration of an auxiliary device, and FIG. 10(b) is a partial perspective view of the auxiliary device as viewed from above.
[FIG. 11] FIG. 11 is a block diagram showing a schematic configuration of a machine tool including an auxiliary device.
[FIG. 12] FIG. 12 is a flowchart illustrating a control method of a machine tool according to the present embodiment

### [Description of Embodiment]

Hereinafter, an embodiment of a machine tool and a control method thereof according to the present invention will be described with reference to the accompanying drawings. In the description of the embodiment, terms (e.g., a "vertical direction", a "horizontal direction", a "longitudinal direction", and a "Z-axis direction", etc.) that are used as appropriate to indicate directions in order to facilitate the understanding are merely illustrative, and these terms are not intended to limit the present invention. In the drawings, constituent parts of the machine tool are illustrated in relative dimensions in order to clarify the shape and the characteristics thereof, and are not necessarily shown with the same scale ratio. In addition, the same constituent parts are denoted by the same reference numerals in the drawings.

### [Overall Configuration of Machine Tool]

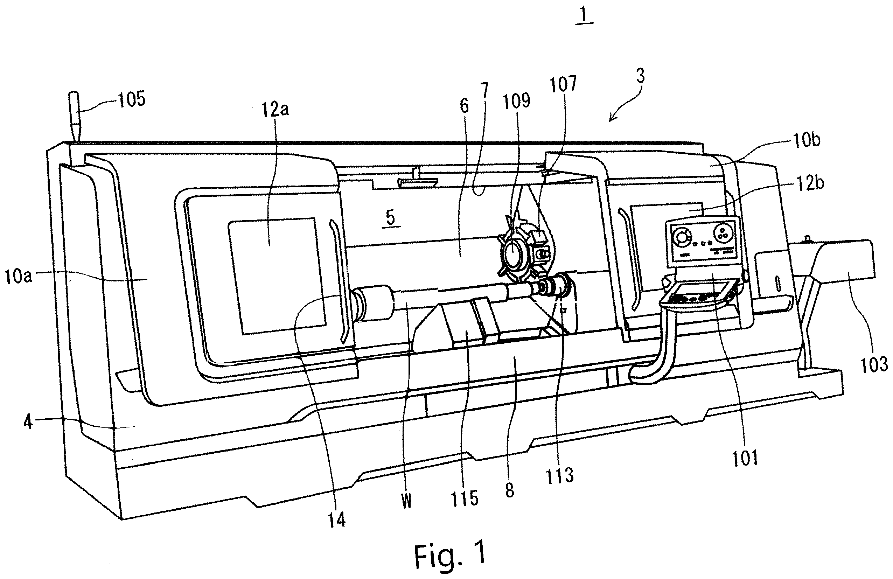

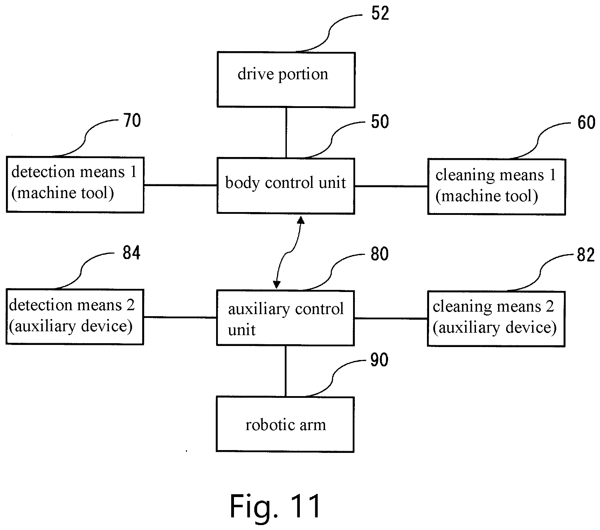

FIG. 1 is a schematic perspective view showing an overall configuration of a machine tool 1 implemented as a lathe according to an embodiment of the present invention The machine tool 1 according to the present embodiment includes a casing 3 (also referred to as a cover) directly installed on the floor of a factory or the like, and also includes a fixed cover 4 having a door opening, and a pair of movable covers 10a and 10b (collectively referred to as a "movable cover 10"), as shown in FIG. 1. The movable cover 10 moves in a horizontal direction relative to the fixed cover 4 (moves to a closed position) so as to cover the door opening, thus defining therein a machining region 5 for machining a workpiece (member to be machined). In addition, the machine tool 1 includes a body control unit 50 (FIG. 11) commonly configured by a programmable logic controller (PLC), a human machine interface (also referred to as HMI) 101 configured as a multi-touch monitor, a chip processing portion 103 that collects/processes a coolant containing chips D generated during machining of the workpiece W, and a warning lamp 105 that provides a warning to an operator in the event of a malfunction of the machine tool 1.

The machine tool 1 shown in FIG. 1 includes a tool post 109 to which a tool holder 107 is replaceably attached in the machining region 5, a spindle (not shown) that rotates about a Z axis (a horizontal axis), a tailstock 113 that presses the center of the workpiece in the Z-axis direction, a workpiece rest 115, and so forth

The human machine interface 101 is capable of communicating with the body control unit 50, and the operator can set/teachjobs (various operations of the machine tool 1) via the human machine interface 101, and record the jobs in a memory (not shown) inside the body control unit 50. The body control unit 50 is configured to control the operations of a rotation drive portion that rotates the spindle and/or an opening/closing drive portion that moves the movable cover 10 to be opened or closed (these drive portions are collectively referred to simply as a drive portion 52 (FIG. 11)"), and is also configured to control the operations of cleaning means 60 (also referred to as a cleaning portion; FIG. 11) that removes a foreign object D on the rail 20, and detection means 70 (also referred to as a detection portion; FIG. 11) that detects a foreign object D on the rail 20, the details of which will be described in detail later.

Note that in the present embodiment, the cleaning means 60 and the detection means 70 are not limited to those installed in the machine tool 1, and may be disposed physically spaced apart. In this respect, in the present application, cleaning means 60 and detection means 70 that are incorporated in a device separate from the machine tool 1 but have functions equivalent to those described above are regarded as constituent parts of the machine tool 1, and are referred to as a "cleaning portion" and a "detection portion", respectively, which terms are used interchangeably.

As described above, usually, the body control unit 50 controls the drive portion 52 so as to open or close the movable cover 10. However, the movable cover 10 is also provided with an opening/closing handle 14 so as to allow the operator to manually open or close the movable cover 10. The movable cover 10 includes a window portion 12 formed of a high impact resistance glass (so-called bulletproof glass).

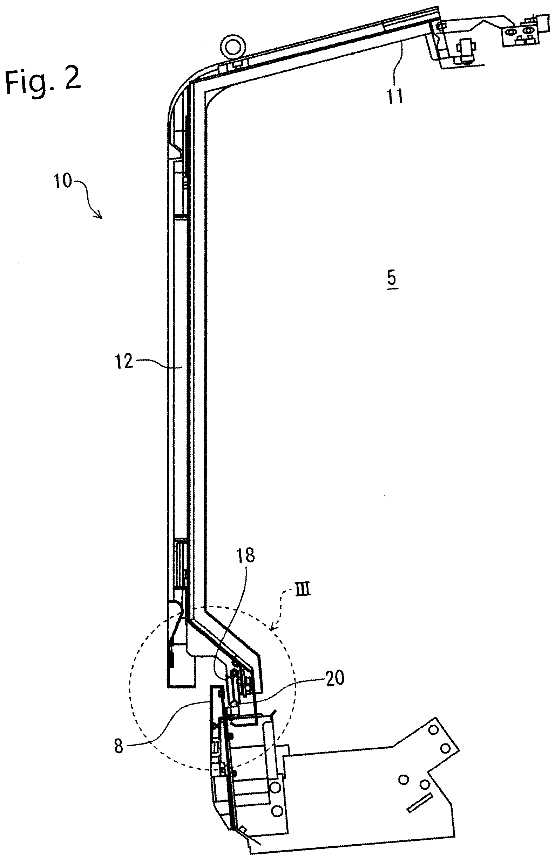

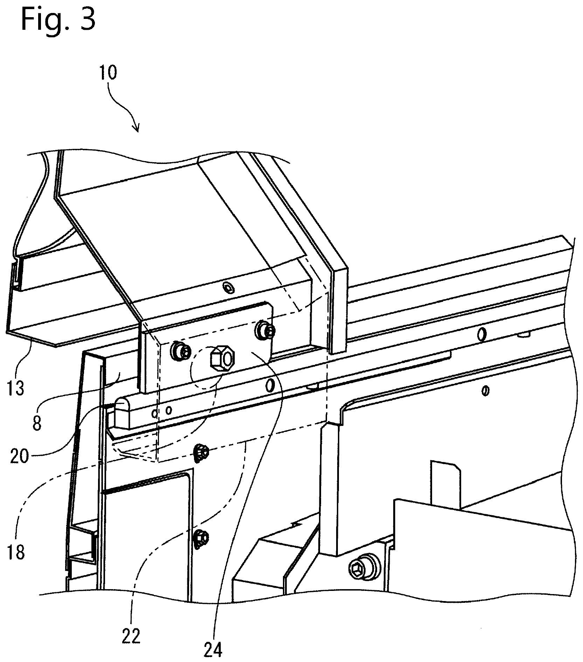

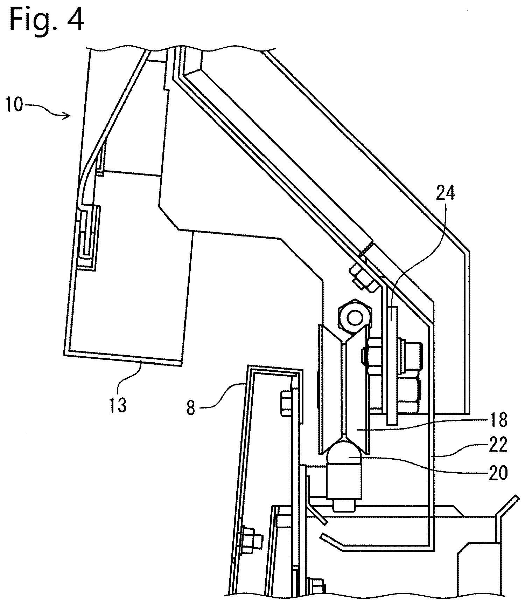

FIG. 2 is a cross-sectional view of the movable cover 10 as viewed from a plane parallel to a vertical plane, and FIG. 3 is a partially phantom perspective view of the portion indicated by the dashed circle III in FIG. 2, as viewed from the machining region 5 toward the outside of the casing 3. FIG. 4 is an enlarged cross-sectional view showing portions of the movable cover 10 and the casing 3 as viewed from the Z-axis direction (horizontal direction).

As shown in the drawings, the casing 3 includes a casing front portion 8 that partially defines the machining region 5, and a rail 20 fixed to the casing front portion 8, and the movable cover 10 includes a roller 18 that rotates on the rail 20. That is, the rail 20 is disposed so as to be opposed to the casing front portion 8, and extends in the Z-axis direction (the longitudinal direction of the rail 20).

The movable cover 10 includes a protection plate 22 that surrounds a portion of the movable cover 10, including the roller 18, in order to prevent the coolant sprayed during machining and the chips D generated from the workpiece W from being attached to the roller 18 of the movable cover 10 and the rail 20. However, since the protection plate 22 is disposed adjacent to the roller 18 and does not cover the entirety of the rail 20, the coolant and the chips D may be attached to the rail 20 during machining. When the movable cover 10 is moved in a state in which the chips D generated from the workpiece W are attached to the rail 20 during machining, the chips D are trapped between the roller 18 and the rail 20, and an anti-trapping mechanism (not shown) of the machine tool 1 is started, whereby the movable cover 10 is stopped. At this time, unless the chips D are not removed, the body control unit 50 maintains the movable cover 10 in the stopped state. As described above in the related art section, if the movable cover 10 is maintained in the stopped state when the machine tool is programmed to continuously machine the workpiece W in the absence of the operator (e.g., at night), the machining of the workpiece W is suspended for a long period of time (until the next morning when the operator removes the foreign object D), resulting in a significant reduction in the production yield.

Therefore, the machine tool 1 according to the present embodiment includes cleaning means 60 that removes the foreign object D on the rail 20. Although the body control unit 50 controls the drive portion 52 so as to move the movable cover 10 on the rail 20, the rail 20 may be cleaned using the cleaning means 60 each time the movable cover 10 is moved, regardless of the presence or absence of the foreign object D on the rail 20 (without detecting the presence or absence of the foreign object D on the rail 20).

However, if cleaning the rail 20 using the cleaning means 60 each time the movable cover 10 is moved leads to a substantial increase in the overall machining time, the machine tool 1 may further include detection means 70 that detects a foreign object D on the rail 20. In this case, it is preferable that the body control unit 50 controls the cleaning means 60 so as to remove the foreign object D (chip) on the rail 20, and controls the drive portion 52 so as to move the movable cover 10 on the rail 20, if the detection means 70 does not detect any foreign object D on the rail 20, or if the detection means 70 detects a foreign object D on the rail 20 and thereafter the cleaning means 60 removes the foreign object D on the rail 20.

### (Specific Configuration of Cleaning Means)

The cleaning means 60 may have any configuration as long as the foreign object D on the rail 20 is removed before the movable cover 10 moves on the rail 20, and may roughly include a rotary brush, a fixed brush, a blade, an air blower, a wiper, or an electromagnet member, and may be attached to the casing front portion 8 so as to be movable along the longitudinal direction of the rail 20.

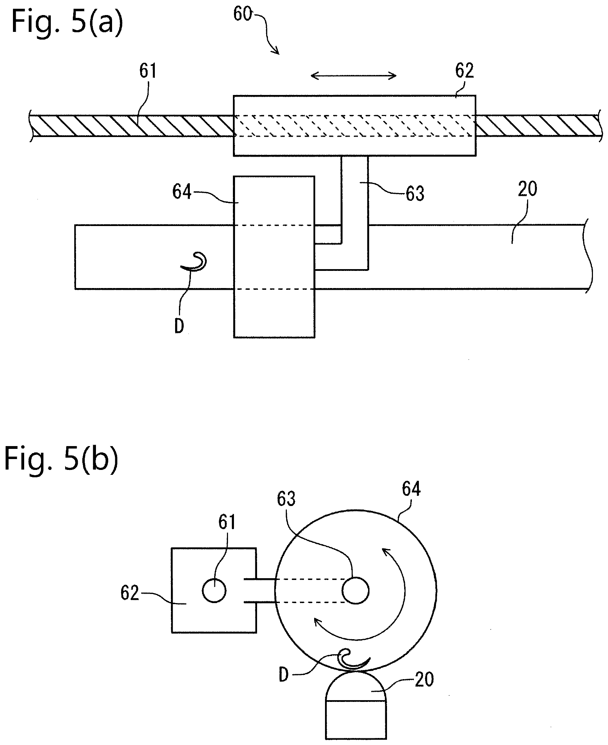

FIGS. 5(a) and 5(b) are a plan view and a cross-sectional view, respectively, conceptually showing a specific example of the cleaning means 60. The cleaning means 60 shown in FIGS. 5(a) and 5(b) includes a ball screw 61 having an end portion fixed via a rotary motor (both not shown) to the casing front portion 8, a slider 62 that moves along a longitudinal direction (indicated by a bidirectional arrow) of the rail 20 with the rotation of the ball screw 61 (rotary motor), an L-shaped arm 63 fixed to the slider 62, and a rotary brush 64 attached to the arm 63. As shown in the drawings, when the slider 62 and the rotary brush 64 move along the longitudinal direction of the rail 20, the foreign object D on the rail 20 can be swept out toward the machining region 5.

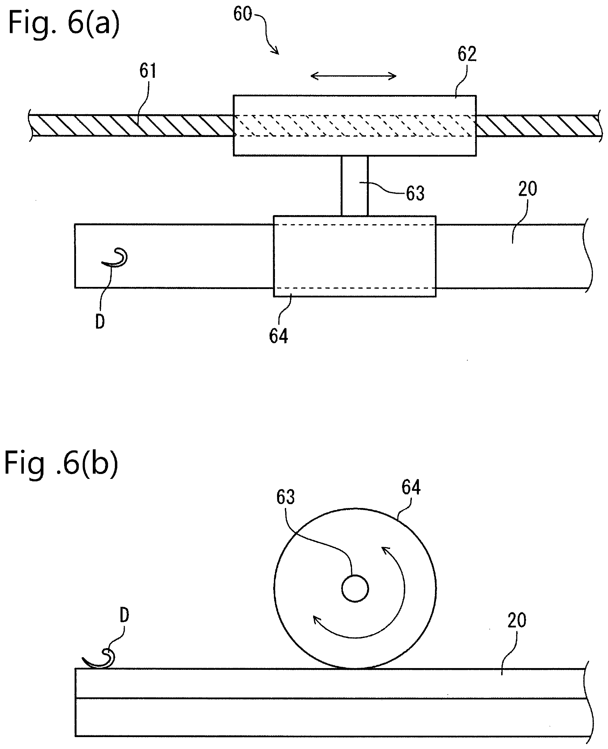

FIGS. 6(a) and 6(b) are a plan view and a front view, respectively, conceptually showing another specific example of the cleaning means 60. The cleaning means 60 shown in FIGS. 6(a) and 6(b) similarly includes a ball screw 61 having an end portion fixed via a rotary motor (both not shown) to the casing front portion 8, a slider 62 that moves along the longitudinal direction of the rail 20 with the rotation of the ball screw 61 (rotary motor), a straight arm 63 fixed to the slider 62, and a rotary brush 64 attached to the arm 63. The rotary brush 64 shown in FIGS. 6(a) and 6(b) is configured to rotate in a direction parallel to the longitudinal direction of the rail 20. As shown in the drawings, when the slider 62 and the rotary brush 64 move along the longitudinal direction of the rail 20, the foreign object D on the rail 20 can be removed.

In place of the rotary brush 64 of the cleaning means 60 described above, a brush that does not rotate (a fixed brush) or a blade may be attached to the arm 63. The fixed brush or the blade has a configuration simpler than that of the rotary brush 64, but can similarly remove the foreign object D on the rail 20 when moving along the longitudinal direction of the rail 20.

In place of the rotary brush 64 of the cleaning means 60 described above, an electromagnet or a permanent magnet (not shown) may be attached to the arm 63. When the foreign object D is a chip generated when machining a magnetic material, the electromagnet or the permanent magnet can attract and remove the chip on the rail 20.

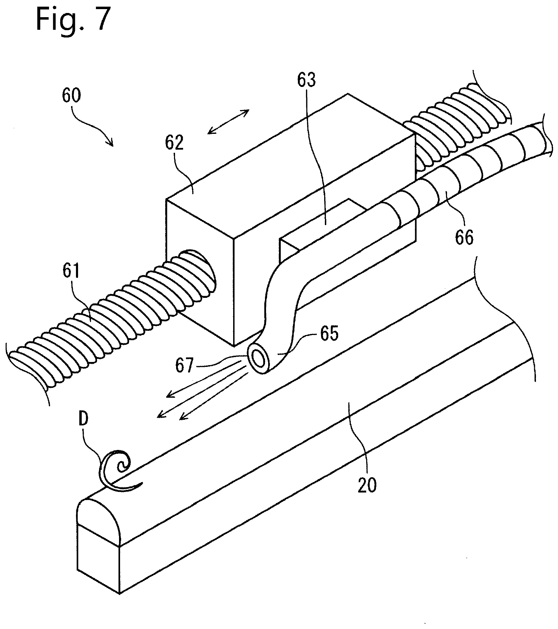

FIG. 7 is a perspective view conceptually showing still another specific example of the cleaning means 60. The cleaning means 60 shown in FIG. 7 similarly includes a ball screw 61 having an end portion fixed via a rotary motor (both not shown) to the casing front portion 8, a slider 62 that moves along a longitudinal direction (indicated by a bidirectional arrow) of the rail 20 with the rotation of the ball screw 61 (rotary motor), an arm 63 extending from the slider 62, and an air blower 65 (gas supply hose) attached to the arm 63. The air blower 65 has one end portion (not shown) connected via a flexible tube 66 to a blowing portion (not shown) such as an air compressor that supplies a gas (air), and the other end portion 67 from which the gas is ejected when the blowing portion supplies the gas. As shown in the drawing, when the slider 62 and the air blower 65 move along the longitudinal direction of the rail 20, the foreign object D on the rail 20 can be blown away.

Although the air blower 65 shown in FIG. 7 ejects the gas toward the longitudinal direction of the rail 20, the air blower 65 is not limited thereto, and may be configured to eject the gas in a direction that forms a predetermined angle with (e.g., a direction orthogonal to) the longitudinal direction The air blower 65 configured in this manner can blow away the foreign object D on the rail 20 toward the machining region 5.

The ball screw 61 and the slider 62 of the cleaning means 60 shown in FIGS. 5 to 7 may be disposed inside the casing front portion 8, and may be configured such that the arm 63 protrudes from the casing front portion 8. This can prevent the coolant sprayed during machining and the chips D generated from the workpiece W from being attached to the ball screw 61 and the slider 62, so that the drive portion 52 can smoothly drive the cleaning means 60.

Although the cleaning means 60 shown in FIGS. 5 to 7 has been described as being movably fixed to the casing front portion 8 via the ball screw 61, the cleaning means 60 is not limited thereto, and may be attached to the movable cover 10. For example, the cleaning means 60 may be provided on a cover lower portion 13, a roller holding portion 24, or a protection plate 22 (see FIG. 4) of the movable cover 10. In this case, the cleaning means 60 moves along the longitudinal direction of the rail 20 together with the movable cover 10, and it is therefore possible to omit the mechanisms (the ball screw 61 and the slider 62) for moving the rotary brush 64, the air blower 65, and so forth along the longitudinal direction of the rail 20, thus simplifying the configuration of the cleaning means 60.

Furthermore, the rotary brush, the fixed brush, the blade, the air blower, or the electromagnet member of the cleaning means 60 shown in FIGS. 5 to 7 may be attached to a multi-axis articulated robotic arm (not shown) disposed inside the machining region 5. Also in this case, it is possible to similarly omit the mechanisms (the ball screw 61 and the slider 62) for moving the rotary brush or the like along the longitudinal direction of the rail 20, thus simplifying the configuration of the cleaning means 60.

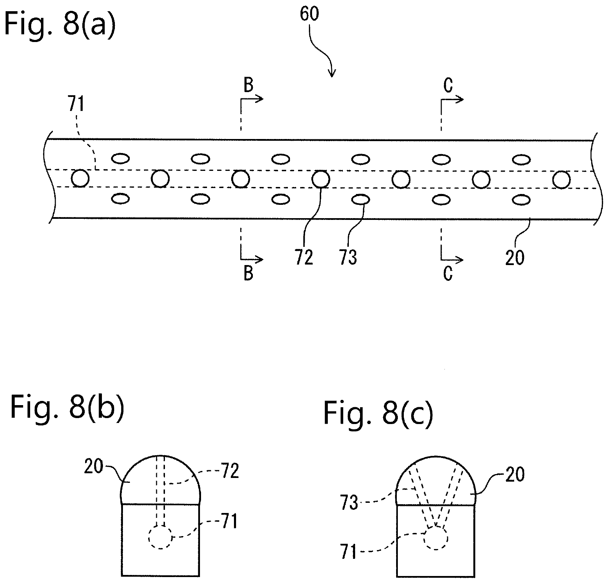

FIG. 8(a) is a plan view showing yet another specific example of the cleaning means 60, and FIGS. 8(b) and 8(c) are cross-sectional views taken along the lines B-B and C-C, respectively, in FIG. 8(a). The cleaning means 60 shown in FIGS. 8(a) to 8(c) is incorporated in the rail 20, and includes a main flow path 71 extending in the longitudinal direction of the rail 20, a plurality of branch flow paths 72 and 73 extending from the main flow path 71, and a blowing portion (not shown) such as an air compressor that supplies a gas (air) from one or both ends (not shown) of the main flow path 71. The cleaning means 60 is configured such that the gas supplied from the blowing portion is ejected from the plurality of branch flow paths 72 and 73 through the main flow path 71. The cleaning means 60 configured in this manner can blow away the foreign object D on the rail 20 by ejecting the gas from the branch flow paths 72 and 73.

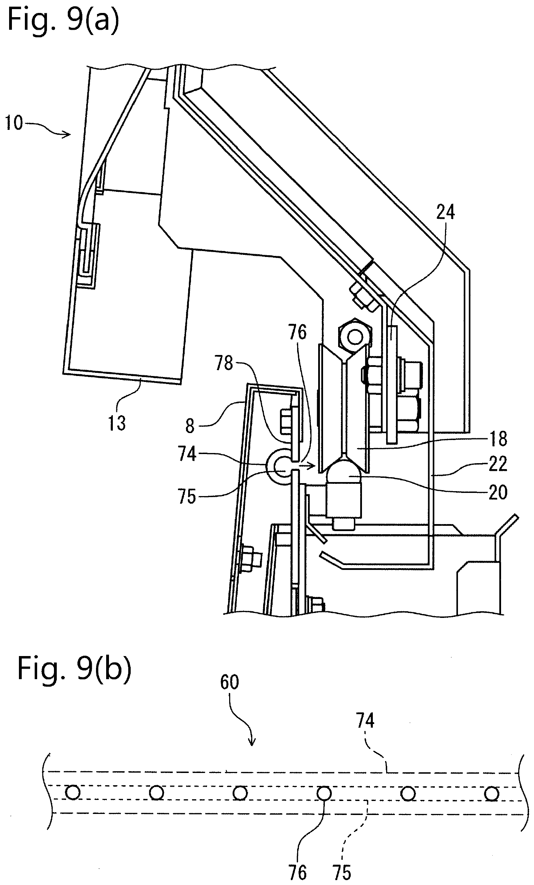

FIGS. 9(a) and 9(b) are a cross-sectional view and a front view, respectively, showing a further specific example of the cleaning means 60. The cleaning means 60 shown in FIGS. 9(a) and 9(b) includes a conduit pipe 74 fixed inside the casing front portion 8, a plurality of through holes 76 formed in the casing front portion 8, and a blowing portion (both not shown) such as an air compressor that supplies a gas (air) into the conduit pipe 74. The conduit pipe 74 is partially cut in the longitudinal direction, and is fixed (welded) to an inner wall 78 of the casing front portion 8, whereby a main flow path 75 is formed. On the other hand, a plurality of through holes 76 (also referred as branch flow paths) are formed in the inner wall 78 of the casing front portion 8 at positions opposed to the rail 20 at fixed intervals in the longitudinal direction The main flow path 75 of the conduit pipe 74 is in fluid communication with the through holes 76, and the gas supplied from one or both end portions of the main flow path 75 is ejected from the plurality of through holes 76. Thus, the cleaning means 60 can blow away the foreign object D on the rail 20.

### (Specific Configuration of Detection Means)

The detection means 70 may have any configuration as long as the detection means 70 detects a foreign object D on the rail 20, and roughly includes a displacement sensor, a measurement sensor, or an image sensor, and is attached to the movable cover 10, or attached to the casing front portion 8 so as to be movable along the longitudinal direction of the rail 20, or disposed inside the machining region 5.

In the present application, the displacement sensor and the measurement sensor mean wide-ranging devices that measure the distance (displacement) to a foreign object D (chip), and include an optical displacement sensor, a linear proximity sensor, and an ultrasonic displacement sensor, and the like, and the image sensor includes a CCD area sensor, a CCD linear sensor, and the like.

The detection means 70 may be disposed inside the machining region 5 without moving, and may be, for example, fixed to a wall portion 6 or a ceiling portion 7 (see FIG. 1) of the casing 3 that defines the machining region 5, or may be fixed to a cover upper portion 11 (see FIG. 2) of the movable cover 10, and may be configured to move together with the movable cover 10. As in the case of the cleaning means 60, the detection means 70 may be movably fixed to the casing front portion 8 via the ball screw 61, or may be fixed to the movable cover 10 (the cover lower portion 13, the roller holding portion 24, or the protection plate 22; see FIG. 4), or may be attached to a multi-axis articulated robotic arm (not shown) disposed inside the machining region 5.

The detection means 70 may further include a probe (a probe member, not shown) that is fixed to the movable cover 10 (e.g., the roller holding portion 24), and that protrudes in a direction away from the roller 18 (the longitudinal direction of the rail 20). The detection means 70 may be configured to detect a foreign object D on the rail 20 by applying a predetermined voltage between the probe and the rail 20, and detecting a current flowing upon the probe coming into contact with a conductive chip D (a reduction in the electrical resistance between the probe and the chip D or the capacitance with which the probe is charged).

As described above, according to the present embodiment, the roller 18 of the movable cover 10 does not collide with the foreign object D on the rail 20 when the movable cover 10 is moved on the rail 20 to be opened or closed, and it is thus possible to prevent damage to the roller 18 and/or the rail 20.

### (Specific Configuration of Auxiliary Device)

In recent years, autonomous mobile robots have been actively introduced as the next-generation transport systems that can realize the digitization of a factory as a whole. An autonomous mobile robot automates the loading/unloading of a workpiece W into and from the machine tool 1 and the logistics in a factory in which a plurality of machine tools 1 are provided, and also realizes a coexistence environment with a person (operator). In the present application, such an autonomous mobile robot is regarded as a device (auxiliary device 2) that assists the machine tool 1, and the present invention is applied to the machine tool 1 including the auxiliary device 2.

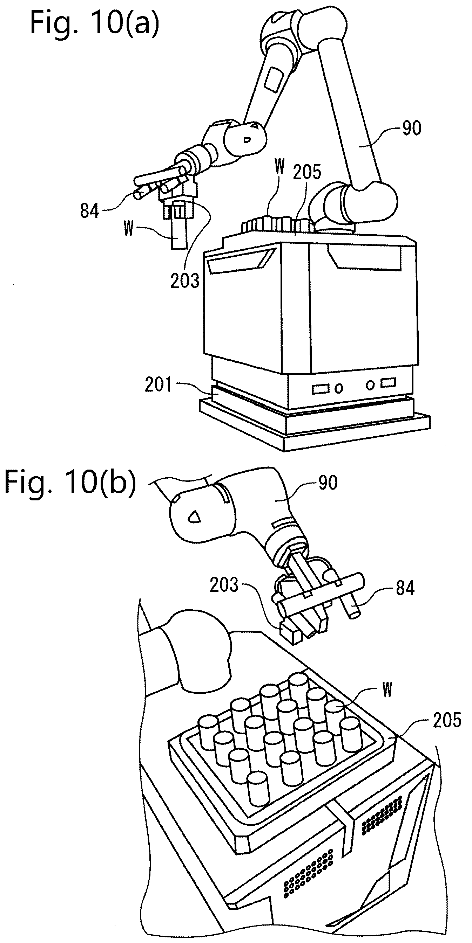

FIG. 10(a) is a diagram showing an overall configuration of the auxiliary device 2, and FIG. 10(b) is a partial perspective view of the auxiliary device 2 as viewed from above. FIG. 11 is a block diagram showing a schematic configuration of the machine tool 1 including the auxiliary device 2. The auxiliary device 2 roughly includes an automated guided vehicle 201 (also referred to as an AGV (Auto-Guided Vehicle), a multi-axis articulated robotic arm 90, a three-dimensional imaging device 84 (detection means) and a gripping portion 203 that are attached to the multi-axis articulated robotic arm 90, and an auxiliary control unit 80 (FIG. 11) that controls these constituent parts, and that is capable of communicating with the body control unit 50 of the machine tool 1. As shown in FIG. 10(b), the auxiliary device 2 includes a workpiece stocker 205 in which cylindrical workpieces W are orderly arranged. Note that the communication between the body control unit 50 and the auxiliary control unit 80 is preferably performed via a wireless LAN (local area network) using the communication standard of IEEE 802.11, for example.

The auxiliary device 2 includes another cleaning means 82 and another detection means 84 ("cleaning means 2" and "detection means 2" in FIG. 11), independent of the cleaning means 60 and the detection means 70 ("cleaning means 1" and "detection means 1" in FIG. 11) of the machine tool 1. Although FIG. 10(a) shows the multi-axis articulated robotic arm 90 gripping a workpiece W, the multi-axis articulated robotic arm 90 may grip any device including, for example, the cleaning means such as a brush or the detection means such as an image sensor as described above.

At this time, the auxiliary control unit 80 can communicate with the body control unit 50 of the machine tool 1 to control the operations of the multi-axis articulated robotic arm 90, the cleaning means 82, and the detection means 84. Accordingly, the auxiliary control unit 80 can control the cleaning means 82 so as to remove the foreign object D on the rail 20, in cooperation (in conjunction) with the control of the drive portion 52 (the opening/closing drive portion that moves the movable cover 10 to be opened or closed) performed by the body control unit 50.

That is, the auxiliary control unit 80 controls the cleaning means 82 so as to remove the foreign object D on the rail 20, and transmits, to the body control unit 50, a signal indicating that the detection means 84 does not detect any foreign object D on the rail 20, or that the detection means 84 detects a foreign object D on the rail 20 and thereafter the cleaning means 82 has removed the foreign object D on the rail 20. Thereafter, the body control unit 50 controls the drive portion 52 so as to move the movable cover 10 on the rail 20.

Thus, the cleaning means 82 and the detection means 84 provided in the auxiliary device 2 can achieve the same functions as those of the cleaning means 60 and the detection means 70 provided in the machine tool 1, and therefore, the cleaning means 60 and the cleaning means 82 (i.e., "cleaning means 1" and "cleaning means 2" in FIG. 11) can be interchangeably used with the detection means 70 and the detection means 84 (i.e., "detection means 1" and "detection means 2" in FIG. 11). That is, the machine tool 1 according to the present embodiment can work cooperatively with the auxiliary device 2 to remove the foreign object D on the rail 20 by using any combination of the cleaning means 60 and 82 and the detection means 70 and 84 (e.g., "detection means 1" and "cleaning means 2" or "detection means 2" and "cleaning means 1" in FIG. 11), and, therefore, the roller of the movable cover does not collide with the foreign object on the rail when the movable cover is moved to be opened or closed on the rail, and it is thus possible to prevent damage to the roller and/or the rail.

### [Control Method of Machine Tool]

A control method of a machine tool according to the present embodiment roughly includes a cleaning step of removing a foreign object D on the rail 20 using the cleaning means 60 (or the cleaning means 82), and a moving step of moving, after the cleaning step, the movable cover 10 on the rail 20. The control method of a machine tool according to the present embodiment can be implemented with the body control unit 50 such as a programmable logic controller.

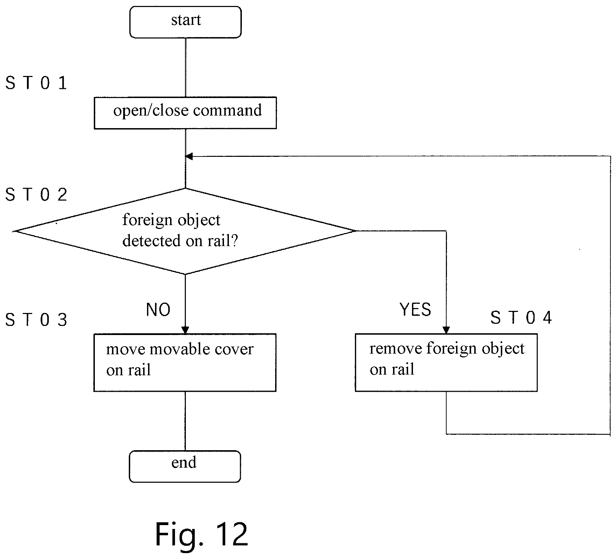

FIG. 12 is a flowchart illustrating the control method of a machine tool according to the present embodiment

In step ST01, the body control unit 50 of the machine tool 1 transmits, to the drive portion 52, an open/close command for moving the movable cover 10 to be opened or closed.

Although not shown, the body control unit 50 may transmit the open/close command also to the cleaning means 60, for example, and the cleaning means 60 that has received the open/close command may always clean the rail 20, regardless of the presence or absence of the foreign object D on the rail 20. However, this does not apply if the operation efficiency is substantially reduced by the cleaning means 60 always cleaning the rail 20 each time the cleaning means 60 receives the open/close command. In such a case, the method immediately proceeds to step ST02 after the drive portion 52 has received the open/close command

In the step ST02, the body control unit 50 determines whether or not any foreign object D is present on the rail 20, using the detection means. As described above, the detection means may be the detection means 70 attached to the machine tool 1, or may be the detection means 84 attached to the auxiliary device 2.

If it is determined in the step ST02 that no foreign object D is present on the rail 20 (NO), the body control unit 50 controls the drive portion 52 so as to move the movable cover 10 to be opened or closed in step ST03.

On the other hand, it is determined in the step ST02 that a foreign object D is present on the rail 20 (YES), the body control unit 50 controls the cleaning means 60 (or the cleaning means 82) to clean the rail 20 in step ST04. The method returns to the step ST02, and the body control unit 50 controls the cleaning means 60 (or the cleaning means 82) so as to clean the rail 20 until the body control unit 50 determines that no foreign object D is present on the rail 20.

If the number of times of the cleaning processing performed by the cleaning means 60 (or the cleaning means 82) exceeds a predetermined number (if the foreign object D cannot be removed even after repeatedly performing the cleaning step), for example, a warning lamp 105 may be used to warn the operator of a malfunction that the foreign object cannot be removed. When the machine tool 1 and the auxiliary device 2 include cleaning means that are of types different from each other, the foreign object may be removed by combining their respective cleaning means 60 and 82. For example, when the cleaning means 60 provided in the machine tool 1 is an air blower, and the cleaning means 82 provided in the auxiliary device 2 is a rotary brush, the machine tool 1 may control the cleaning means 60 and 82 such that the foreign object that could not be removed by the air blower is cleaned by the rotary brush Furthermore, the machine tool 1 may use the gripping portion 203 of the multi-axis articulated robotic arm 90 as the cleaning means 82 of the auxiliary device 2, and control the cleaning means 82 to remove a foreign object by directly griping the foreign object.

Although not shown in detail, the body control unit 50 may control the detection means 70 so as to repeatedly detect the presence or absence of the foreign object D on the rail 20 when the drive portion 52 is controlled so as to move the movable cover 10 on the rail, and may control the drive portion 52 and the cleaning means 60 so as to temporarily move the movable cover 10 on the rail 20 in the opposite direction (a direction opposite to the opening direction or the closing direction) when a foreign object D on the rail 20 is detected, and thereafter to remove the foreign object D on the rail 20.

As described above, with the machine tool and the control method thereof according to the present embodiment, the roller 18 of the movable cover 10 does not collide with the foreign object on the rail 20 when the movable cover 10 is moved to be opened or closed on the rail 20, and it is thus possible to prevent damage to the roller 18 and/or the rail 20.

Although the machine tool according to the present embodiment has been described as a lathe as an example, the machine tool may be a machining center, a cutting machine, or an additive manufacturing device.

The description of the above embodiment is in all respects illustrative and not limiting. It will be appreciated by those skilled in the art that alterations and modifications can be made as appropriate. The scope of the present invention is defined by the claims, rather than the above-described embodiment. Furthermore, the scope of the present invention encompasses changes from the embodiment within the range of the claims and the range of equivalents of the claims.

### [Industrial Applicability]

The present invention is applicable to a machine tool that removes a foreign object on a rail, and that moves a movable cover on the rail, and a control method thereof.

Although the present invention has been described in terms of the presently preferred embodiments, it is to be understood that such disclosure is not to be interpreted as limiting. Various variations and modifications will become clearly apparent to those skilled in the art to which the present invention pertains upon reading the disclosure given above. Accordingly, the scope of the appended claims should be construed to encompass all variations and modifications without departing from the true spirit and scope of the present invention

### [Reference Signs List]

- 1: Machine tool
- 2: Auxiliary device
- 3: Casing
- 4: Fixed cover
- 5: Machining region
- 6: Wall portion
- 7: Ceiling portion
- 8: Casing front portion
- 10: Movable cover
- 11: Cover upper portion
- 12: Window portion
- 13: Cover lower portion
- 14: Opening/closing handle
- 18: Roller
- 20: Rail
- 22: Protection plate
- 24: Roller holding portion
- 50: Body control unit
- 52: Drive portion
- 60: Cleaning means (cleaning portion)
- 61: Ball screw
- 62: Slider
- 63: Arm
- 64: Rotary brush
- 65: Air blower (gas supply hose)
- 66: Flexible tube
- 67: End portion
- 70: Detection means (detection portion)
- 71: Main flow path
- 72, 73: Branch flow path
- 74: Conduit pipe
- 75: Main flow path
- 76: Through hole (branch flow path)
- 78: Inner wall
- 80: Auxiliary control unit
- 82: Cleaning means
- 84: Detection means
- 90: Multi-axis articulated robotic arm
- 101: Human machine interface (HMI)
- 103: Chip processing portion
- 105: Warning lamp
- 107: Tool holder
- 109: Tool post
- 113: Tailstock
- 115: Workpiecerest
- 201: Automated guided vehicle
- 203: Gripping portion
- 205: Workpiece stocker
- W: Workpiece
- D: Foreign object (chip)

## Claims

1. A machine tool comprising:
a casing and a movable cover that define a machining region in which a workpiece is machined;
a rail;
a drive portion that moves the movable cover on the rail;
cleaning means that removes a foreign object on the rail;
a body control unit that controls the drive portion so as to move the movable cover on the rail; and
detection means that detects a foreign object on the rail,
wherein the body control unit performs
step ST01 of transmitting, to the drive portion, an open/close command for moving the movable cover to be opened or closed;
step ST02 of determining, after the step ST01, whether or not a foreign object is present on the rail using the detection means;
step ST03 of controlling the drive portion so as to move the movable cover to be opened or closed, if it is determined in the step ST02 that no foreign object is present on the rail; and
step ST04 of removing, if it is determined in the step ST02 that a foreign object is present on the rail, the foreign object on the rail using the cleaning means, and thereafter returning to the step ST02.

2. The machine tool according to claim 1,
wherein the movable cover includes a roller that rotates on the rail, and a protection plate disposed between the machining region, and the rail and the roller.

3. The machine tool according to claim 1 or 2,
wherein the casing includes a casing front portion that partially defines the machining region and that is opposed to the rail, and
the cleaning means includes a rotary brush, a fixed brush, a blade, an air blower, a wiper, or an electromagnet member, and is attached to the movable cover, or attached to the casing front portion so as to be movable along a longitudinal direction of the rail.

4. The machine tool according to claim 1, further comprising
an auxiliary device including an auxiliary control unit capable of communicating with the body control unit,
wherein the cleaning means is attached to the auxiliary device, and includes a rotary brush, a fixed brush, a blade, an air blower, a wiper, or an electromagnet member that is movable along a longitudinal direction of the rail, and
the body control unit communicates with the auxiliary control unit to control the cleaning means so as to remove the foreign object on the rail.

5. The machine tool according to claim 3 or 4,
wherein the rotary brush rotates along a longitudinal direction of the rail, or rotates in a direction substantially orthogonal to the longitudinal direction.

6. The machine tool according to claim 3 or 4,
wherein the air blower ejects a gas to the rail toward a longitudinal direction of the rail, or toward a direction substantially orthogonal to the longitudinal direction.

7. The machine tool according to claim 1,
wherein the cleaning means includes a main flow path extending in a longitudinal direction of the rail, and a plurality of branch flow paths extending from the main flow path, and removes a foreign object on the rail by supplying a gas to the main flow path so as to be ejected from the branch flow paths.

8. The machine tool according to claim 7,
wherein the casing includes a casing front portion that partially defines the machining region and that is opposed to the rail,
the main flow path of the cleaning means penetrates inside the rail, and the branch flow paths are formed so as to extend on a surface of the rail, or
a conduit pipe constituting the main flow path of the cleaning means is provided at the casing front portion, and a gas is ejected toward the rail from the branch flow paths.

9. The machine tool according to claim 1,
wherein the detection means includes a displacement sensor, a measurement sensor, or an image sensor, and is attached to the movable cover, or attached to the casing front portion so as to be movable along a longitudinal direction of the rail, or disposed inside the machining region.

10. The machine tool according to claim 4,
wherein the detection means includes a displacement sensor, a measurement sensor, or an image sensor that is attached to the auxiliary device, and
the body control unit communicates with the auxiliary control unit to control the detection means so as to detect a foreign object on the rail.

11. The machine tool according to claim 1,
wherein the casing includes a casing front portion that partially defines the machining region and that is opposed to the rail, and
the detection means includes a probe that is fixed to the movable cover, or fixed to the casing front portion so as to be movable along a longitudinal direction of the rail, and detects a foreign object on the rail by detecting a change in electrical resistance or capacitance between the probe and the rail.

12. The machine tool according to claim 4 or 10,
wherein the auxiliary device is an autonomous mobile robot.
